# EUROPEAN PATENT APPLICATION

(11) **EP 3 848 226 A1**
(43) Date of publication of application: **14.07.2021**
(21) Application number: 20151470.0
(22) Date of filing: 13.01.2020
(51) Int. Cl.: B60L 3/00, B60L 50/16, B60L 58/10

(54) **LDC-INTEGRATED BATTERY MANAGEMENT DEVICE AND METHOD FOR 48V MILD HYBRID SYSTEM**

(71) Applicant: Hyundai Mobis Co., Ltd., Gangnam-gu Seoul 06141 (KR)
(72) Inventor: KIM, Il Han, 16872 Gyeonggi-do (KR)
(74) Representative: dompatent von Kreisler Selting Werner - Partnerschaft von Patent- und Rechtsanwälten mbB

(57) **Abstract**

A low DC-DC converter (LDC)-integrated battery management device for a 48V mild hybrid system according to the present invention includes an low DC-DC converter (LDC)-integrated battery management device for a 48V mild hybrid system, in which a battery management system and an LDC of a 48V mild hybrid system, which are each controlled by an electronic control unit (ECU), are integrally managed.

## Description

### BACKGROUND

### 1. Field of the Invention

The present invention relates to a low DC-DC converter (LDC)-integrated battery management device for a 48V mild hybrid system, and more specifically, to an LDC-integrated battery management device for a 48V mild hybrid system, in which a conventional LDC and a 48V battery module independently provided are integrated into one component, an initial driving function of a starter generator is implemented in software, and thus a pre-charging relay and a charging resistor are removed.

### 2. Discussion of Related Art

In general, mild hybrid systems using battery cells include a battery cell management assembly configured to control the battery cells for supplying a voltage of 48 V, a 12V battery configured to supply a voltage of 12 V to electronic devices, a starting generator, that is, a 48V mild hybrid starter and generator (MHSG) configured to assist in a driving force of an engine using the voltage of 48 V applied from the battery cell and having a regenerative braking function which charges a battery during decelerating of a vehicle, a 48V low DC-DC converter (LDC) configured to supply power to 12V electronic components, and an equipment management controller configured to control each component using a controller area network (CAN).

In the conventional mild hybrid system using the battery cell, the 48V LDC and the battery cell management assembly are independently separated. As a result, control units for the 48V LDC and a battery management system are inevitably separated.

Thus, the 48V LDC and the battery management system perform functions thereof in an independent assembly manner.

In addition, the equipment management controller controls charging of battery cells of the battery management system at a start of an engine through a voltage of a DC link capacitor (CAP).

Meanwhile, the conventional battery cell management assembly supplies a voltage of 48 V to the 48V LDC and the 48V MHSG.

However, in the conventional mild hybrid systems using the battery cells, since the battery cell management assembly and the 48V LDC are independently provided, manufacturing costs for housings and boards of the battery cell management assembly and the 48V LDC are doubled, and separate software is also required for each of them.

In addition, since the battery cell management assembly and the 48V LDC are independently provided, man-hours are required for mounting the battery cell management assembly and the 48V LDC in a vehicle, and thus, mounting spaces thereof should be secured in the vehicle.

### SUMMARY OF THE INVENTION

The present invention is directed to providing a low DC-DC converter (LDC)-integrated battery management device for a 48V mild hybrid system, in which a battery management system and an LDC of a 48V mild hybrid system, which are each controlled by an electronic control unit (ECU), are integrally managed.

The above mentioned objects of the present invention are not limited thereto, and other objects belonging to the present invention can be obviously understood along with the descriptions below.

According to an aspect of the present invention, there is provided an LDC-integrated battery management device for a 48V mild hybrid system, including a mild hybrid starter and generator (MHSG) configured to charge a battery cell through regenerative braking during decelerating of a vehicle and assist in a driving force of an engine during traveling of the vehicle; a 12V battery configured to apply a voltage of 12 V when an ignition of the vehicle is turned on; an LDC-integrated battery module configured to perform a self-diagnosis using the voltage of 12 V applied from the 12V battery, convert the voltage of 12 V to a voltage of 48 V according to a result of the self-diagnosis, and then supply the voltage of 48 V to the battery cell and the MHSG; and an equipment management controller configured to perform a control such that the voltage of 12 V of the 12V battery is applied to the LDC-integrated battery module when the ignition of the vehicle is tuned on and control the LDC-integrated battery module such that the voltage of 48 V converted through the LDC-integrated battery module is applied to the battery cell and the MHSG.

The LDC-integrated battery module may include the battery cell which is charged with and discharges the voltage of 48 V; a switching unit configured to charge the voltage of 48 V applied through the MHSG in the battery cell and perform a switching operation such that the engine is driven using the voltage of 48 V of the battery cell; an integrated control unit configured to control the switching unit to charge and discharge the battery cell when the voltage of 12 V is applied from the 12V battery; and a cooling unit configured to cool the battery cell and the integrated control unit.

The integrated control unit may compare an output voltage of an LDC boost mode with an actual voltage of the battery cell, and when a difference between the output voltage of the LDC boost mode and the actual voltage of the battery cell is greater than or equal to a preset voltage value, the integrated control unit may relay the switching unit such that the boosted voltage of 48 V is charged in the battery cell.

When the ignition of the vehicle is turned on and the voltage of 12 V is applied, the LDC-integrated battery module may perform a self-diagnosis, and when the LDC-integrated battery module is in a normal state according to a result of the self-diagnosis, the LDC-integrated battery module may convert the voltage of 12 V into the voltage of 48 V (of an LDC boost mode) and charge the voltage of 48 V in a DC link capacitor (CAP) of the MHSG.

When the LDC-integrated battery module is in an abnormal state according to the result of the self-diagnosis, the LDC-integrated battery module may count the number of abnormal instances, and when the number of abnormal instances reaches a preset number of counts, the LDC-integrated battery module may operate a warning lamp and stop a process of converting the voltage of 12 V into the voltage of 48 V.

When the voltage of 12 V is boosted to the voltage of 48 V and the voltage of 48 V is charged in the DC link CAP of the MHSG, the LDC-integrated battery module may compare a value with the boosted voltage of 48 V, wherein the value is obtained by multiplying a voltage of the battery cell by a reference ratio of a charging voltage of the DC link CAP, and as a result of the comparison, the LDC-integrated battery module may boost the voltage of 48 V to a level at which the value obtained by multiplying the voltage of the battery cell by the reference ratio of the charging voltage of the DC link CAP is greater than or equal to an output voltage of the boosted voltage of 48 V.

When an LDC idle mode request is input from the equipment management controller, the LDC-integrated battery module may stop an operation of converting the voltage of 12 V to the voltage of 48 V (LDC boost mode).

According to an aspect of the present invention, there is provided an LDC-integrated battery management method for a 48V mild hybrid system, which is performed by a 48V mild hybrid system including a 12V battery, an MHSG, an LDC-integrated battery module including a battery cell, and an equipment management controller, the LDC-integrated battery management method including, when an ignition of a vehicle is turned on, receiving, by the LDC-integrated battery module, a voltage of 12 V from the 12V battery; performing, by the LDC-integrated battery module, a self-diagnosis to determine whether a problem occurs; when it is determined that the problem does not occur, boosting, by the LDC-integrated battery module, the received voltage of 12 V to a voltage of 48 V; applying, by the LDC-integrated battery module, the voltage of 48 V to the MHSG; and controlling, by the LDC-integrated battery module, a switching unit to charge the voltage of 48 V according to a difference between the boosted voltage of 48 V and a voltage of the battery cell for 48 V.

The applying of the voltage of 48 V to the MHSG may include comparing a value with the boosted voltage of 48 V, wherein the value is obtained by multiplying a voltage of the battery cell by a reference ratio of a charging voltage of a DC link CAP; and as a result of the comparison, boosting the voltage of 48 V to a level at which the value obtained by multiplying the voltage of the battery cell by the reference ratio of the charging voltage of the DC link CAP is greater than or equal to an output voltage of the boosted voltage of 48 V.

The controlling of the switching unit to charge the voltage of 48 V may include determining, by the LDC-integrated battery module, whether the boosted voltage of 48 V is less than a value that is obtained by multiplying a voltage of 48 V of the battery cell for 48 V by a reference ratio of a charging voltage of a DC link CAP; and when the boosted voltage of 48 V is less than the value that is obtained by multiplying the voltage of 48 V of the battery cell for 48 V by the reference ratio of the charging voltage of the DC link CAP in the determination, controlling, by the LDC-integrated battery module, the switching unit to control charging and discharging of the battery cell for 48 V.

In the charging of the voltage of 48 V in a DC link CAP of the MHSG, when an LDC idle mode request is input from the equipment management controller, the LDC-integrated battery module may stop an operation of converting the voltage of 12 V to the voltage of 48 V (LDC boost mode).

### BRIEF DESCRIPTION OF THE DRAWINGS

FIG. 1 is a functional block diagram for describing a low DC-DC converter (LDC)-integrated battery management device for a 48V mild hybrid system according to an exemplary embodiment of the present invention.
FIG. 2 is a diagram for describing a detailed configuration of the LDC-integrated battery module according to the exemplary embodiment of the present invention.
FIG. 3 is a flowchart for describing an LDC-integrated battery management method for a 48V mild hybrid system according to an exemplary embodiment of the present invention.
FIG. 4 is a flowchart for describing an operation of applying a voltage of 48 V to a starter generator (100) according to an exemplary embodiment of the present invention.

### DETAILED DESCRIPTION OF EXEMPLARY EMBODIMENTS

Advantages and features of the present invention and methods for accomplishing the same will be more clearly understood from exemplary embodiments described below with reference to the accompanying drawings. However, the present invention is not limited to the following exemplary embodiments but may be implemented in various different forms. The exemplary embodiments are provided only to complete the disclosure of the present invention and to fully provide a person having ordinary skill in the art to which the present invention pertains with the scope of the present invention, and the present invention will be defined by the appended claims. Terms used in this specification are to describe the exemplary embodiments and are not intended to limit the present invention. As used herein, singular expressions, unless defined otherwise in contexts, include plural expressions. It will be further understood that the terms "comprises," "comprising," "includes," and/or "including," if used herein, specify the presence of stated components, steps, operations, and/or elements, but do not preclude the presence or addition of one or more other components, steps, operations, and/or elements.

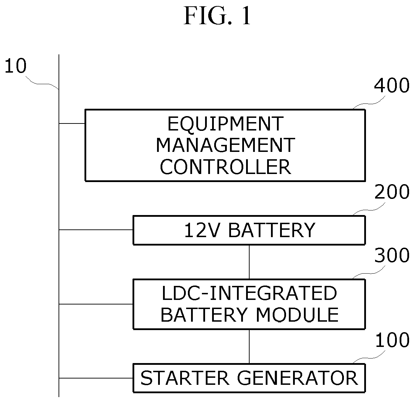

Hereinafter, exemplary embodiments of the present invention will be described in detail with reference to the accompanying drawings. FIG. 1 is a functional block diagram for describing a low DC-DC converter (hereinafter, referred to as "LDC")-integrated battery management device for a 48V mild hybrid system according to an exemplary embodiment of the present invention.

As shown in FIG. 1, the LDC-integrated battery management device for a 48V mild hybrid system according to the exemplary embodiment of the present invention includes a starter generator 100, a 12V battery 200, an LDC-integrated battery module 300, and an equipment management controller 400.

The starter generator 100 serves to charge a battery cell through regenerative braking during decelerating of a vehicle and assist in a driving force of an engine during traveling of the vehicle. The starter generator 100 is a mild hybrid starter and generator (MHSG).

When an ignition of the vehicle is turned on, the 12V battery 200 serves to apply a voltage of 12 V to the starter generator 100 and each electronic component of the vehicle.

The LDC-integrated battery module 300 performs a self-diagnosis using the voltage of 12 V applied from the 12V battery 200 and then serves to convert a voltage of 12 V to a voltage of 48 V and supply the voltage of 48 V to the battery cell and the starter generator 100 according to a result of the diagnosis.

In addition, when the ignition of the vehicle is tuned on, the equipment management controller 400 serves to control the 12V battery 200 through a controller area network (CAN) communication protocol such that the voltage of 12 V of the 12V battery 200 is applied to the LDC-integrated battery module 300. In addition, the equipment management controller 400 serves to control the LDC-integrated battery module 300 through the CAN communication protocol such that the voltage of 48 V converted through the LDC-integrated battery module 300 is applied to the battery cell and the starter generator 100.

According to the exemplary embodiment of the present invention, as in the related art, since an LDC and a 48V battery management module are independently provided, when an ignition of a vehicle is turned on, a voltage is supplied to a starter generator using software, thereby removing a pre-charging relay and a charging resistor conventionally required for supplying a voltage to the starter generator to reduce costs and man-hours for constituting a system.

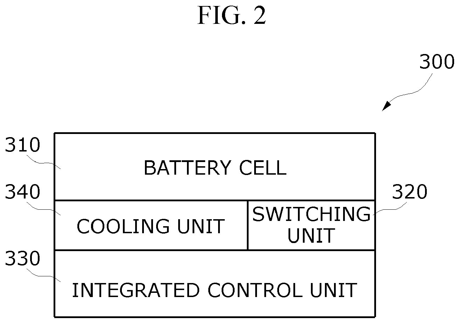

FIG. 2 is a diagram for describing a detailed configuration of the LDC-integrated battery module according to the exemplary embodiment of the present invention.

As shown in FIG. 2, the LDC-integrated battery module 300 includes a battery cell 310, a switching unit 320, an integrated control unit 330, and a cooling unit 340.

The battery cell 310 is charged with or discharges a voltage of 48 V.

The switching unit 320 serves to charge a voltage of 48 V applied through the starter generator 100 in the battery cell 310 and perform a switching operation such that the engine is driven using the voltage of 48 V of the battery cell 310.

In addition, when the voltage of 12 V is applied from the 12V battery 200, the integrated control unit 330 serves to control the switching unit 320 to charge and discharge the battery cell 310.

The cooling unit 340 is disposed between the battery cell 310 and a board of the integrated control unit 330 and serves to cool the battery cell 310 and the integrated control unit 330.

Here, the integrated control unit 330 compares an output voltage of an LDC boost mode with an actual voltage of the battery cell 310. When a difference between the output voltage of the LDC boost mode and the actual voltage of the battery cell 310 is greater than or equal to a preset voltage value, the integrated control unit 330 controls the switching unit such that the boosted voltage of 48 V is charged in the battery cell 310.

Meanwhile, when an ignition of a vehicle is turned on and a voltage of 12 V is applied, the LDC-integrated battery module 300 performs a self-diagnosis.

Then, when the LDC-integrated battery module 300 is in a normal state according to a result of the diagnosis, the LDC-integrated battery module 300 converts the voltage of 12 V into a voltage of 48 V (of an LDC boost mode) and charges the voltage of 48 V in a DC link capacitor (CAP) of the starter generator 100.

Meanwhile, when the LDC-integrated battery module 300 is in an abnormal state according to the result of the self-diagnosis, the LDC-integrated battery module 300 counts the number of abnormal instances. When the number of abnormal instances reaches a preset number of counts, the LDC-integrated battery module 300 operates a warning lamp and stops a process of converting the voltage of 12 V into the voltage of 48 V.

In addition, when a voltage of 12 V is boosted to a voltage of 48 V and the voltage of 48 V is charged in the DC link CAP of the starter generator 100, the LDC-integrated battery module 300 compares a value with the boosted voltage of 48 V, wherein the value is obtained by multiplying a voltage of the battery cell 310 by a reference ratio of a charging voltage of the DC link CAP. As a result of the comparison, the LDC-integrated battery module 300 boosts the boosted voltage of 48 V to a level at which the value obtained by multiplying the voltage of the battery cell 310 by the reference ratio of the charging voltage of the DC link CAP is greater than or equal to an output voltage of the boosted voltage of 48 V.

When an LDC idle mode request is input from the equipment management controller 400, the LDC-integrated battery module 300 stops an operation of converting the voltage of 12 V to the voltage of 48 V (LDC boost mode).

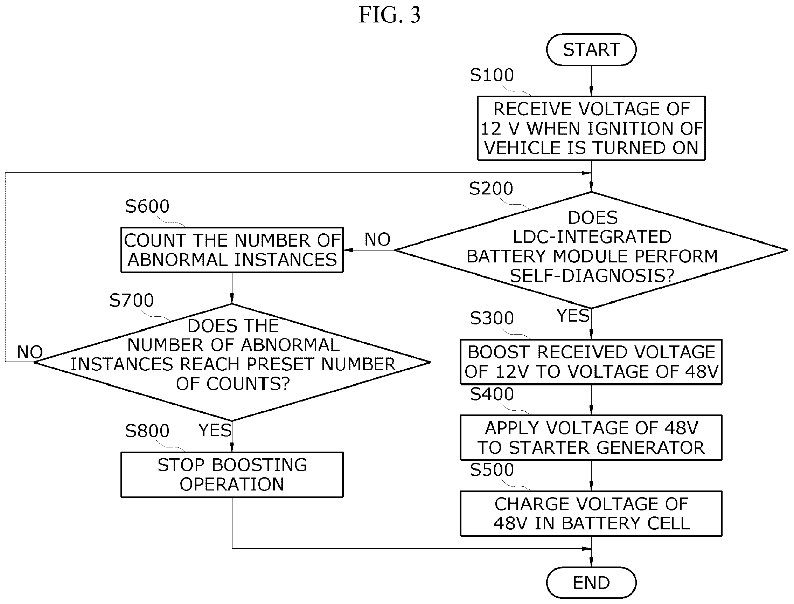

Hereinafter, an LDC-integrated battery management method for a 48V mild hybrid system according to an exemplary embodiment of the present invention will be described below with reference to FIG. 3.

The LDC-integrated battery management method for a 48V mild hybrid system according to the exemplary embodiment of the present invention is performed by a 48V mild hybrid system including a 12V battery 200, a starter generator 100, an LDC-integrated battery module 300 including a battery cell 310, and an equipment management controller 400.

First, when an ignition of a vehicle is turned on, the LDC-integrated battery module 300 receives a voltage of 12 V from the 12V battery 200 (S100).

Next, the LDC-integrated battery module 300 performs a self-diagnosis and determines whether a problem occurs (S200).

When it is determined in operation S200 that the problem does not occur (YES), the LDC-integrated battery module 300 boosts the received voltage of 12 V to a voltage of 48 V (S300).

Then, the LDC-integrated battery module 300 applies the voltage of 48 V to the starter generator 100 (S400).

Meanwhile, the LDC-integrated battery module 300 controls a switching unit to charge the voltage of 48 V in the battery cell according to a difference between the boosted voltage of 48 V and a voltage of the battery cell for 48 V (S500).

According to the exemplary embodiment of the present invention, as in the related art, since an LDC and a 48V battery management module are independently provided, when an ignition of a vehicle is turned on, a voltage is supplied to a starter generator using software, thereby removing a pre-charging relay and a charging resistor conventionally required for supplying a voltage to the starter generator to reduce costs and man-hours for constituting a system.

Meanwhile, when it is determined in operation S200 that the problem occurs (NO), the LDC-integrated battery module 300 counts the number of abnormal instances (S600). When the number of abnormal instances reaches a preset number of counts (YES), the LDC-integrated battery module 300 operates a warning lamp and stops a process of converting the voltage of 12 V into the voltage of 48 V (S700). When the number of abnormal instances does not reach the preset number of counts (NO), the process returns to operation S200 in which the LDC-integrated battery module performs the self-diagnosis.

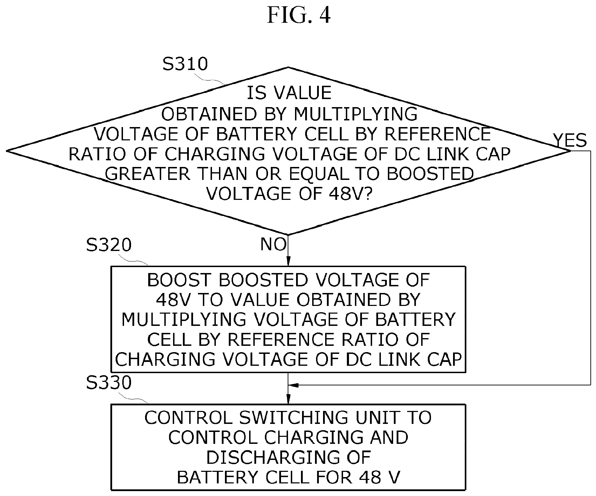

FIG. 4 is a flowchart for describing an operation of applying a voltage of 48 V to the starter generator 100 according to an exemplary embodiment of the present invention.

As shown in FIG. 4, a boosted voltage of 48 V is compared with a value obtained by multiplying a voltage of the battery cell 310 by a reference ratio of a charging voltage of a DC link CAP (S310).

When the boosted voltage of 48 V is less than the value obtained by multiplying the voltage of the battery cell 310 by the reference ratio of the charging voltage of the DC link CAP, the boosted voltage of 48 V is boosted to the value obtained by multiplying the voltage of the battery cell 310 by the reference ratio of the charging voltage of the DC link CAP (S320).

When the boosted voltage of 48 V is greater than or equal to the value obtained by multiplying the voltage of the battery cell 310 by the reference ratio of the charging voltage of the DC link CAP (YES), the LDC-integrated battery module 300 controls the switching unit to control charging and discharging of the battery cell for 48 V (S330).

Meanwhile, in an operation of charging a voltage of 48 V in the DC link CAP of the starter generator 100, when an LDC idle mode request is input from the equipment management controller 400, the LDC-integrated battery module 300 stops an operation of converting the voltage of 12 V to the voltage of 48 V (LDC boost mode).

According to an exemplary embodiment of the present invention, an LDC and a battery cell of an LDC-integrated battery management system can be controlled in a software manner using a single controller to provide functions of a relay and a charging resistor for pre-charging an MHSG of a conventional mild hybrid system, thereby removing components for pre-charging the MHSG to reduce costs and man-hours.

Although the configurations of the present invention have been described in detail above with reference to the accompanying drawings, these are mere examples, and those of ordinary skill in the technical field to which the present invention pertains can make various modifications and changes within the technical spirit of the present invention. Therefore, the scope of the present invention should not be limited by the above-described exemplary embodiments but should be determined by the following claims.

## Claims

1. A low DC-DC converter LDC-integrated battery management device for a 48V mild hybrid system, comprising:
a mild hybrid starter and generator MHSG configured to charge a battery cell through regenerative braking during decelerating of a vehicle and assist in a driving force of an engine during traveling of the vehicle;
a 12V battery configured to apply a voltage of 12 V when an ignition of the vehicle is turned on;
an LDC-integrated battery module configured to perform a self-diagnosis using the voltage of 12 V applied from the 12V battery, convert the voltage of 12 V to a voltage of 48 V according to a result of the self-diagnosis, and then supply the voltage of 48 V to the battery cell and the MHSG; and
an equipment management controller configured to perform a control such that the voltage of 12 V of the 12V battery is applied to the LDC-integrated battery module when the ignition of the vehicle is tuned on and control the LDC-integrated battery module such that the voltage of 48 V converted through the LDC-integrated battery module is applied to the battery cell and the MHSG.

2. The LDC-integrated battery management device of claim 1, wherein the LDC-integrated battery module includes:
the battery cell which is charged with and discharges the voltage of 48 V;
a switching unit configured to charge the voltage of 48 V applied through the MHSG in the battery cell and perform a switching operation such that the engine is driven using the voltage of 48 V of the battery cell;
an integrated control unit configured to control the switching unit to charge and discharge the battery cell when the voltage of 12 V is applied from the 12V battery; and
a cooling unit configured to cool the battery cell and the integrated control unit.

3. The LDC-integrated battery management device of claim 2, wherein the integrated control unit compares an output voltage of an LDC boost mode with an actual voltage of the battery cell, and when a difference between the output voltage of the LDC boost mode and the actual voltage of the battery cell is greater than or equal to a preset voltage value, the integrated control unit relays the switching unit such that the boosted voltage of 48 V is charged in the battery cell.

4. The LDC-integrated battery management device of claim 1, wherein, when the ignition of the vehicle is turned on and the voltage of 12 V is applied, the LDC-integrated battery module performs a self-diagnosis, and when the LDC-integrated battery module is in a normal state according to a result of the self-diagnosis, the LDC-integrated battery module converts the voltage of 12 V into the voltage of 48 V and charges the voltage of 48 V in a DC link capacitor of the MHSG.

5. The LDC-integrated battery management device of claim 1, wherein, when the LDC-integrated battery module is in an abnormal state according to the result of the self-diagnosis, the LDC-integrated battery module counts the number of abnormal instances, and when the number of abnormal instances reaches a preset number of counts, the LDC-integrated battery module operates a warning lamp and stops a process of converting the voltage of 12 V into the voltage of 48 V.

6. The LDC-integrated battery management device of claim 5, wherein, when the voltage of 12 V is boosted to the voltage of 48 V and the voltage of 48 V is charged in the DC link CAP of the MHSG, the LDC-integrated battery module compares a value with the boosted voltage of 48 V, wherein the value is obtained by multiplying a voltage of the battery cell by a reference ratio of a charging voltage of the DC link CAP, and as a result of the comparison, the LDC-integrated battery module boosts the voltage of 48 V to a level at which the value obtained by multiplying the voltage of the battery cell by the reference ratio of the charging voltage of the DC link CAP is greater than or equal to an output voltage of the boosted voltage of 48 V.

7. The LDC-integrated battery management device of claim 4, wherein, when an LDC idle mode request is input from the equipment management controller, the LDC-integrated battery module stops an operation of converting the voltage of 12 V to the voltage of 48 V.

8. A low DC-DC converter LDC-integrated battery management method for a 48V mild hybrid system, which is performed by a 48V mild hybrid system including a 12V battery, a mild hybrid starter and generator MHSG, an LDC-integrated battery module including a battery cell, and an equipment management controller, the LDC-integrated battery management method comprising;
when an ignition of a vehicle is turned on, receiving, by the LDC-integrated battery module, a voltage of 12 V from the 12V battery;
performing, by the LDC-integrated battery module, a self-diagnosis to determine whether a problem occurs;
when it is determined that the problem does not occur, boosting, by the LDC-integrated battery module, the received voltage of 12 V to a voltage of 48 V;
applying, by the LDC-integrated battery module, the voltage of 48 V to the MHSG; and
controlling, by the LDC-integrated battery module, a switching unit to charge the voltage of 48 V according to a difference between the boosted voltage of 48 V and a voltage of the battery cell for 48 V.

9. The LDC-integrated battery management method of claim 8, wherein the applying of the voltage of 48 V to the MHSG includes:
comparing a value with the boosted voltage of 48 V, wherein the value is obtained by multiplying a voltage of the battery cell by a reference ratio of a charging voltage of a DC link capacitor; and
as a result of the comparison, boosting the voltage of 48 V to a level at which the value obtained by multiplying the voltage of the battery cell by the reference ratio of the charging voltage of the DC link CAP is greater than or equal to an output voltage of the boosted voltage of 48 V.

10. The LDC-integrated battery management method of claim 8, wherein the controlling of the switching unit to charge the voltage of 48 V includes:
determining, by the LDC-integrated battery module, whether the boosted voltage of 48 V is less than a value that is obtained by multiplying a voltage of 48 V of the battery cell for 48 V by a reference ratio of a charging voltage of a DC link CAP; and
when the boosted voltage of 48 V is less than the value that is obtained by multiplying the voltage of 48 V of the battery cell for 48 V by the reference ratio of the charging voltage of the DC link CAP in the determination, controlling, by the LDC-integrated battery module, the switching unit to control charging and discharging of the battery cell for 48 V.

11. The LDC-integrated battery management method of claim 8, wherein, in the charging of the voltage of 48 V in a DC link CAP of the MHSG, when an LDC idle mode request is input from the equipment management controller, the LDC-integrated battery module stops an operation of converting the voltage of 12 V to the voltage of 48 V.
